# EUROPÄISCHE PATENTSCHRIFT

(11) **EP 3 005 460 B1**
(45) Veröffentlichungstag und Bekanntmachung des Hinweises auf die Patenterteilung: **12.04.2017**
(21) Anmeldenummer: 14758836.2
(22) Anmeldetag: 28.08.2014
(51) Int. Cl.: H01M 8/1213, H01M 8/124, H01M 8/0217, H01M 8/0236, H01M 8/0297, H01M 4/86

(54) **VERFAHREN ZUR VERBINDUNG EINES ELEKTRISCH LEITFÄHIGEN KONTAKTELEMENTS MIT WENIGSTENS EINER EINER BRENNSTOFFZELLE ZUGEORDNETEN, ELEKTRISCH LEITFÄHIGEN BRENNSTOFFZELLENKOMPONENTE**
METHOD FOR CONNECTING AN ELECTRICALLY CONDUCTIVE CONTACT ELEMENT TO AT LEAST ONE ELECTRICALLY CONDUCTIVE FUEL CELL COMPONENT WHICH IS ASSOCIATED WITH A FUEL CELL
PROCÉDÉ DE JONCTION D'UN ÉLÉMENT DE CONTACT ÉLECTRIQUEMENT CONDUCTEUR À AU MOINS UN COMPOSANT DE PILE À COMBUSTIBLE ÉLECTRIQUEMENT CONDUCTEUR ASSOCIÉ À UNE PILE À COMBUSTIBLE

(30) Priorität: 10.09.2013 DE 102013218053
(43) Veröffentlichungstag der Anmeldung: 13.04.2016
(73) Patentinhaber: Siemens Aktiengesellschaft, 80333 München (DE)
(72) Erfinder: LEONIDE, André, 90762 Fürth (DE); GREINER, Horst, 91301 Forchheim (DE)
(86) Internationale Anmeldenummer: PCT/EP2014/068210
(87) Internationale Veröffentlichungsnummer: WO 2015/036246

(56) Entgegenhaltungen:
- WO-A1-88/08045
- WO-A2-92/22096
- DE-C1- 4 314 745
- US-A- 5 629 103
- US-A1- 2003 231 973
- US-A1- 2005 048 346
- US-A1- 2009 123 810

## Beschreibung

Die Erfindung betrifft ein Verfahren zur Verbindung eines elektrisch leitfähigen Kontaktelements mit wenigstens einer einer Brennstoffzelle zugeordneten, elektrisch leitfähigen Brennstoffzellenkomponente.

Im Rahmen der Herstellung einer Brennstoffzelle, insbesondere einer Hochtemperatur-Brennstoffzelle, d. h. einer Brennstoffzelle, deren Betriebstemperatur oberhalb 500°C liegt, ist es bekannt, ein elektrisch leitfähiges Kontaktelement, welches insbesondere in Form einer Kontaktschicht vorliegen kann, mit einer der Brennstoffzelle zugehörigen bzw. zugeordneten elektrisch leitfähigen Brennstoffzellenkomponente, wie z. B. einer Elektrode zu verbinden respektive ein elektrisch leitfähiges Kontaktelement auf eine entsprechende elektrisch leitfähige Brennstoffzellenkomponente aufzubringen. Das elektrisch leitfähige Kontaktelement dient insbesondere dazu, die elektrische Kontaktierung zwischen der elektrisch leitfähigen Brennstoffzellenkomponente und weiteren elektrisch leitfähigen Bauteilen der Brennstoffzelle sicherzustellen bzw. zu verbessern.

Die Verbindung respektive Aufbringung des elektrisch leitfähigen Kontaktelements auf die der Brennstoffzelle zugeordnete elektrisch leitfähige Brennstoffzellenkomponente erfolgt bis dato typischerweise mittels Nasspulverbeschichtungsverfahren oder Siebdruckverfahren.

Nasspulverbeschichtungsverfahren erfordern üblicherweise vor der eigentlichen Aufbringung des elektrisch leitfähigen Kontaktelements ein aufwändiges Abkleben der zu beschichtenden elektrisch leitfähigen Brennstoffzellenkomponente, um zu gewährleisten, dass das elektrisch leitfähige Kontaktelement ausschließlich auf die zu beschichtenden Bereiche der elektrisch leitfähigen Brennstoffzellenkomponente aufgebracht wird. Bei Siebdruckverfahren besteht die Gefahr eines unerwünschten Verlaufens des hier pastenförmig aufzubringenden elektrisch leitfähigen Kontaktelements auf nicht zu beschichtende Bereiche der elektrisch leitfähigen Brennstoffzellenkomponente.

Ein weiteres Verfahren aus dem Stand der Technik offenbart das Patent US 5,629,103 A.

Der Erfindung liegt daher die Aufgabe zugrunde, ein demgegenüber verbessertes Verfahren zur Aufbringung bzw. Verbindung eines elektrisch leitfähigen Kontaktelements mit wenigstens einer einer Brennstoffzelle zugeordneten, elektrisch leitfähigen Brennstoffzellenkomponente anzugeben.

Die Aufgabe wird erfindungsgemäß durch ein Verfahren der eingangs genannten Art gelöst, welches sich durch die folgenden Schritte auszeichnet:
- Bereitstellen eines in einem Lösungsmittel löslichen Kontaktelements, das bei Temperaturen oberhalb 500°C, insbesondere zwischen 600 und 1000°C, elektrisch leitfähige Eigenschaften aufweist, sowie einer elektrisch leitfähigen Brennstoffzellenkomponente,
- Aufbringen eines Lösungsmittels zum An- oder Auflösen zumindest des Kontaktelements auf das Kontaktelement und/oder die elektrisch leitfähige Brennstoffzellenkomponente,
- Anordnen des Kontaktelements auf der elektrisch leitfähigen Brennstoffzellenkomponente,
- Verdampfen des Lösungsmittels unter Ausbildung einer Verbindung zwischen dem Kontaktelement und der Brennstoffzellenkomponente.

Gemäß dem erfindungsgemäßen Verfahren wird in einem ersten Schritt ein in einem Lösungsmittel lösliches Kontaktelement sowie eine einer Brennstoffzelle, d. h. insbesondere einer Hochtemperatur-Brennstoffzelle, deren Betriebstemperatur oberhalb 500°C, insbesondere zwischen 600 und 1000°C, liegt zugeordnete oder zuordenbare, elektrisch leitfähige Brennstoffzellenkomponente, wie insbesondere eine Elektrode, bevorzugt eine Kathode, bereitgestellt.

Unter einem elektrisch leitfähigen Kontaktelement ist ein Bauelement zu verstehen, das aufgrund seiner Materialität bzw. chemisch/physikalischen Struktur, insbesondere im Bereich der Betriebstemperatur einer Brennstoffzelle bzw. Hochtemperatur-Brennstoffzelle, d. h. bei Temperaturen oberhalb 500°C, insbesondere zwischen 600 und 1000°C, elektrisch leitfähige Eigenschaften, d. h. insbesondere eine Elektronenleitfähigkeit, aufweist. Das elektrisch leitfähige Kontaktelement liegt typischerweise in Form einer (dünnen) Folie bzw. Schicht vor.

Wesentlich ist, dass ein elektrisch leitfähiges Kontaktelement bereitgestellt wird, welches aufgrund seiner Materialität bzw. seiner chemisch/physikalischen Struktur in einem bestimmten, im Weiteren näher zu spezifizierenden Lösungsmittel löslich ist, d. h. bei Benetzung mit dem Lösungsmittel an-oder auflösbar und somit zumindest oberflächenseitig von einem festen in einen flüssigen Aggregatzustand überführbar ist. Das in dem ersten Schritt des erfindungsgemäßen Verfahrens bereitgestellte elektrisch leitfähige Kontaktelement ist daher aus einem in einem Lösungsmittel löslichen Material gebildet oder umfasst ein solches Material.

In einem auf den ersten Schritt folgenden zweiten Schritt des erfindungsgemäßen Verfahrens wird ein Lösungsmittel auf das Kontaktelement und/oder die Brennstoffzellenkomponente aufgebracht. Hierbei ist auf eine hinreichende Benetzung des Kontaktelements und/oder der Brennstoffzellenkomponente mit dem Lösungsmittel zu achten, um im Weiteren eine ausreichend stabile Verbindung zwischen dem Kontaktelement und der Brennstoffzellenkomponente zu realisieren. Selbstverständlich wird in diesem Schritt ein Lösungsmittel verwendet, welches dazu geeignet ist, zumindest das Kontaktelement an- oder aufzulösen. Die Auswahl des Lösungsmittels erfolgt daher zweckmäßig in Abhängigkeit der Materialität bzw. chemisch/physikalischen Struktur des Kontaktelements.

Es kann hierbei genügen, das Lösungsmittel zumindest abschnittsweise auf das Kontaktelement oder zumindest abschnittsweise auf die Brennstoffzellenkomponente aufzubringen. Die Verbindung zwischen dem Kontaktelement und der Brennstoffzellenkomponente kann jedoch in der Regel dadurch verbessert werden, indem sowohl auf das Kontaktelement als auch auf die Brennstoffzellenkomponente Lösungsmittel aufgebracht wird. Das Lösungsmittel kann auf die der Brennstoffzellenkomponente zugewandte und/oder die der Brennstoffzellenkomponente abgewandte Seite des Kontaktelements aufgebracht werden.

Die Aufbringung des Lösungsmittels kann beispielsweise durch Auftragen mit einem Pinsel, Aufsprühen oder Aufgießen erfolgen. Denkbar ist es auch, das mit dem Lösungsmittel zu benetzende Kontaktelement und/oder die mit dem Lösungsmittel zu benetzende Brennstoffzellenkomponente respektive diesen zugehörige zu benetzende Flächenabschnitte in ein Bad aus einem Lösungsmittel einzutauchen. Selbstverständlich sind grundsätzlich auch andere als die genannten Aufbringungstechniken zur Aufbringung des Lösungsmittels auf das Kontaktelement und/oder die Brennstoffzellenkomponente einsetzbar.

In einem auf den zweiten Schritt folgenden dritten Schritt des erfindungsgemäßen Verfahrens wird das Kontaktelement auf der elektrisch leitfähigen Brennstoffzellenkomponente angeordnet. Das Kontaktelement liegt nach der Anordnung auf der Brennstoffzellenkomponente zumindest abschnittsweise, insbesondere vollständig, flächig bzw. unmittelbar auf der Brennstoffzellenkomponente auf.

In einem auf den dritten Schritt folgenden vierten Schritt des erfindungsgemäßen Verfahrens wird das Lösungsmittel unter Ausbildung einer Verbindung zwischen dem Kontaktelement und der Brennstoffzellenkomponente verdampft. In diesem Schritt erfolgt die eigentliche Ausbildung einer Verbindung zwischen dem Kontaktelement und der Brennstoffzellenkomponente. Bei der Verbindung handelt es sich im Prinzip um eine mittels eines Lösungsmittelklebstoffs hergestellte Klebeverbindung zwischen zwei Fügepartnern. Die erfindungsgemäß durch Verdampfen des Lösungsmittels hergestellte Verbindung ist daher in der Regel stoffschlüssig und sonach entsprechend stabil.

Die durch Verdampfen des Lösungsmittels hergestellte Verbindung zwischen dem Kontaktelement und der Brennstoffzellenkomponente lässt sich vergleichsweise einfach und schnell realisieren, so dass das erfindungsgemäße Verfahren eine, insbesondere unter fertigungstechnischen Gesichtspunkten, sehr effiziente Möglichkeit der Herstellung einer Verbindung zwischen einem entsprechenden Kontaktelement und einer entsprechenden Brennstoffzellenkomponente darstellt. Die schnelle Ausbildung der Verbindung zwischen dem Kontaktelement und der Brennstoffzellenkomponente ist insbesondere auch vorteilhaft für die Handhabbarkeit der mit dem erfindungsgemäßen Verfahren hergestellten, einer Brennstoffzelle zugeordneten bzw. zuzuordnenden Bauteilgruppe.

Der Verdampfungsvorgang des Lösungsmittels erfolgt bei Normal- bzw. Standardbedingungen, insbesondere bei Raumtemperatur (ca. 25°C) und einem Druck von 1 atm, in der Regel von selbst. Der Verdampfungsvorgang des Lösungsmittels kann gegebenenfalls durch die gezielte Einstellung bestimmter Prozessbedingungen, wie z. B. Druck und/oder Temperatur, gesteuert respektive unterstützt respektive beschleunigt werden.

Selbstverständlich ist es denkbar, dass nach Verbindung des Kontaktelements mit der Brennstoffzellenkomponente weitere, der Brennstoffzelle zugeordnete oder zuordenbare Brennstoffzellenkomponenten, wie z. B. eine Interkonnektorplatte, auf das Kontaktelement aufgebracht respektive mit diesem verbunden werden. Das erfindungsgemäße Verfahren zur Verbindung eines elektrisch leitfähigen Kontaktelements mit wenigstens einer einer Brennstoffzelle zugeordneten, elektrisch leitfähigen Brennstoffzellenkomponente kann sonach Teil eines Verfahrens zur Herstellung einer Brennstoffzelle, insbesondere einer Hochtemperatur-Brennstoffzelle, sein.

Im Rahmen des erfindungsgemäßen Verfahrens wird typischerweise ein aus einem Metalloxid gebildetes oder ein ein Metalloxid umfassendes Kontaktelement verwendet. Insbesondere wird ein aus Lanthan-Strontium-Cobalt-Ferrit, kurz LSCF, insbesondere der Formel LaₓSr1-xCoyFe1-yO3-d, gebildetes elektrisch leitfähiges Kontaktelement bzw. ein Lanthan-Strontium-Cobalt-Ferrit, kurz LSCF, insbesondere der Formel LaₓSr1-xCoyFe1-yO3-d, umfassendes elektrisch leitfähiges Kontaktelement verwendet. Das verwendete elektrisch leitfähige Kontaktelement kann alternativ auch aus Lanthan-Strontium-Manganit, kurz LSM, insbesondere der Formel La₁₋ₓSrₓMnO₃, gebildet sein oder Lanthan-Strontium-Manganit, kurz LSM, insbesondere der Formel La₁₋ₓSrₓMnO₃, umfassen.

In diesem Zusammenhang ist zu erwähnen, dass die Brennstoffzellenkomponente aus dem gleichen Material wie das Kontaktelement gebildet sein kann. Die Brennstoffzellenkomponente kann also z. B. ebenso aus Lanthan-Strontium-Cobalt-Ferrit, kurz LSCF, insbesondere der Formel LaₓSr1-xCoyFel-yO3-d, gebildet sein oder Lanthan-Strontium-Cobalt-Ferrit, kurz LSCF, insbesondere der Formel LaₓSr1-xCoyFe1-yO3-d, umfassen.

Dass das im Rahmen des erfindungsgemäßen Verfahrens verwendete elektrisch leitfähige Kontaktelement bildende Material ist zweckmäßig ungesintert und somit nicht spröde, was die Handhabbarkeit und Verarbeitbarkeit des Kontaktelements im Rahmen des erfindungsgemäßen Verfahrens vereinfacht.

Im Rahmen des erfindungsgemäßen Verfahrens wird als elektrisch leitfähiges Kontaktelement insbesondere ein plattenartiges, bevorzugt folienartiges, Bauelement bzw. Material verwendet. Das Kontaktelement kann sonach in Gestalt einer Platte oder, bevorzugt, einer Folie und somit grundsätzlich mit einer ebenen Geometrie vorliegen. Die Verwendung eines als Folie ausgebildeten Kontaktelements hat den Vorteil, dass das Kontaktelement besonders dünn ausgeführt ist und somit den Gesamtaufbau einer Brennstoffzelle in seinen Abmessungen nicht wesentlich verändert. Die Dicke bzw. Höhe des Kontaktelements liegt beispielsweise im Bereich zwischen 50 und 300 µm, insbesondere im Bereich zwischen 100 und 200 µm.

Im Rahmen des erfindungsgemäßen Verfahrens kann das elektrisch leitfähige Kontaktelement vor dem Aufbringen des Lösungsmittels mit wenigstens einer Ausnehmung oder Durchbrechung versehen werden. Die Ausnehmungen oder Durchbrechungen können durch Stanzprozesse in das Kontaktelement eingebracht werden. Die geometrische Gestalt des Kontaktelements kann sonach an weitere, sich im Gesamtverbund einer Brennstoffzelle an der der Brennstoffzellenkomponente abgewandten Seite des Kontaktelements anschließende Bauteile, wie z. B. Interkonnektorplatten, angepasst werden. Die Oberflächenkontur des Kontaktelements kann demnach zweckmäßig an die Oberflächenkontur eines im Gesamtverbund der Brennstoffzelle auf dem Kontaktelement anzuordnenden bzw. mit diesem zu verbindenden Bauteils, wie z. B. einer Interkonnektorplatte, angepasst bzw. dieser entsprechend, d. h. insbesondere gegengleich, ausgebildet werden.

Im Rahmen des erfindungsgemäßen Verfahrens wird als Lösungsmittel insbesondere ein organisches Lösungsmittel, insbesondere Ethanol, verwendet. Grundsätzlich sind jedoch unter Berücksichtigung der Materialität bzw. chemisch/physikalischen Struktur des Kontaktelements auch andersartige, insbesondere organische, Lösungsmittel verwendbar. Sofern das Kontaktelement aus Lanthan-Strontium-Cobalt-Ferrit gebildet ist oder Lanthan-Strontium-Cobalt-Ferrit umfasst, hat sich für die erfindungsgemäß vorgesehenen Zwecke jedoch Ethanol als besonders geeignet erwiesen.

Im Rahmen des erfindungsgemäßen Verfahrens kann es zweckmäßig vorgesehen sein, dass in dem Lösungsmittel vor dem Aufbringen dieses auf das Kontaktelement und/oder die Brennstoffzellenkomponente eine bestimmte Menge des das Kontaktelement bildenden Materials gelöst wird. Das Lösungsmittel liegt sonach als Emulsion aus Lösungsmittel mit darin gelöstem, das Kontaktelement bildendem Material vor. Anteilsmäßig nimmt das gelöste, das Kontaktelement bildende Material in der Emulsion einen Volumenanteil im Bereich 10 - 40%, insbesondere ca. 20%, ein. Durch die Verwendung eines solchen, als Emulsion vorliegenden Lösungsmittels kann die Stabilität der Verbindung zwischen dem Kontaktelement und der Brennstoffzellenkomponente verbessert werden.

Die Erfindung betrifft ferner eine Brennstoffzelle, insbesondere eine Hochtemperatur-Brennstoffzelle, d. h. eine Brennstoffzelle mit einer Betriebstemperatur oberhalb 500°C, insbesondere im Bereich zwischen 600 und 1000°C, umfassend wenigstens eine elektrisch leitfähige Brennstoffzellenkomponente, insbesondere eine Elektrode, bevorzugt eine Kathode, und wenigstens ein mit dieser gemäß dem vorstehend beschriebenen Verfahren verbundenes elektrisch leitfähiges Kontaktelement. Entsprechend gelten für die erfindungsgemäße Brennstoffzelle sämtliche Ausführungen im Zusammenhang mit dem erfindungsgemäßen Verfahren analog.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1 - 3: je eine Prinzipdarstellung eines Kontaktelements und einer Brennstoffzellenkomponente im Rahmen der Durchführung eines Verfahrens gemäß einem Ausführungsbeispiel der Erfindung; und
- Fig. 4: eine Prinzipdarstellung eines Ausschnitts aus einer Brennstoffzelle.

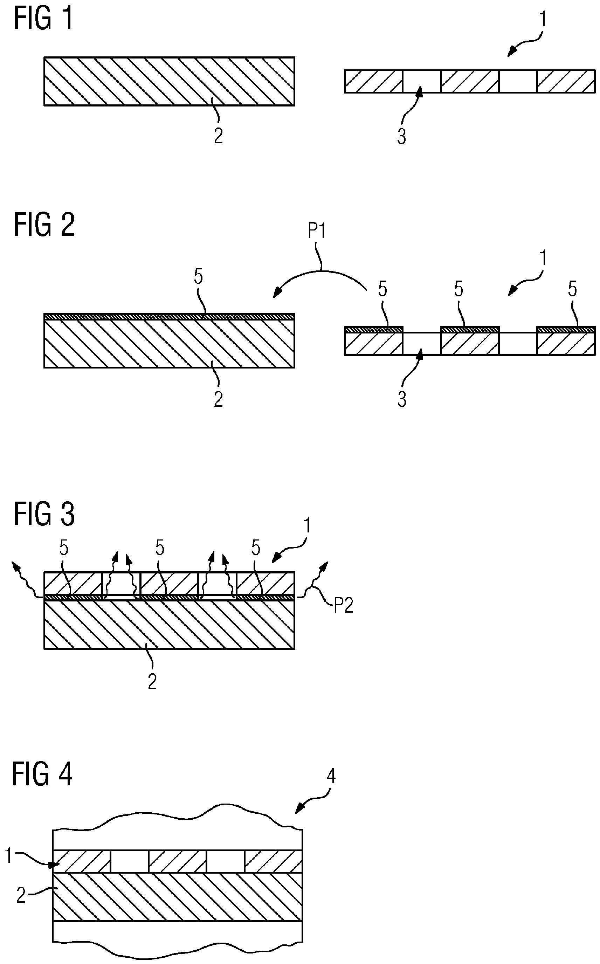

Die Fig. 1 - 3 zeigen je eine Prinzipdarstellung eines elektrisch leitfähigen Kontaktelements 1 und einer elektrisch leitfähigen Brennstoffzellenkomponente 2 im Rahmen der Durchführung eines Verfahrens gemäß einem Ausführungsbeispiel der Erfindung. Die Fig. 1 - 3 zeigen jeweils Schnittansichten des Kontaktelements 1 als auch der Brennstoffzellenkomponente 2.

Fig. 1 zeigt die in dem ersten Schritt des erfindungsgemäßen Verfahrens vorgesehene Bereitstellung eines Kontaktelements 1 und einer Brennstoffzellenkomponente 2. Das Kontaktelement 1 ist im Weiteren auf die Brennstoffzellenkomponente 2 aufzubringen bzw. mit dieser zu stabil bzw. unverlierbar verbinden (vgl. Fig. 2, 3).

Das Kontaktelement 1 ist aus ungesintertem Lanthan-Strontium-Cobalt-Ferrit, Formel LaₓSr1-xCoyFe1-yO3-d, gebildet. Das Kontaktelement 1 liegt als Folie mit einer Dicke bzw. Höhe von ca. 100 µm vor.

Ersichtlich sind in dem Kontaktelement 1 Durchbrechungen 3 ausgebildet. Die, insbesondere durch Stanzprozesse ausgebildeten, Durchbrechungen 3 und die dadurch realisierte Gestalt des Kontaktelements 1 sind an weitere, sich im Gesamtverbund einer Brennstoffzelle 4 (vgl. Fig. 4) an die der Brennstoffzellenkomponente 2 abgewandte Seite des Kontaktelements 1 anschließende Bauteile, wie z. B. Interkonnektorplatten, angepasst. Die Oberflächenkontur des Kontaktelements 1 ist demnach typischerweise im Vergleich zu der Oberflächenkontur eines im Gesamtverbund der Brennstoffzelle 4 auf diesem anzuordnenden bzw. mit diesem zu verbindenden Bauteils gegengleich ausgebildet.

Bei der Brennstoffzellenkomponente 2 handelt es sich um eine als Kathode geschaltete, poröse Elektrode für eine Brennstoffzelle bzw. einer Brennstoffzelle (vgl. Fig. 4). Die Brennstoffzellenkomponente 2 ist ebenso aus Lanthan-Strontium-Cobalt-Ferrit, Formel LaₓSr1-xCoyFe1-yO3-d, gebildet. Im Gegensatz zu dem das Kontaktelement 1 bildenden Material ist das die Brennstoffzellenkomponente 2 bildende Material jedoch bereits gesintert. Grundsätzlich kann jedoch auch ein nicht gesintertes, die Brennstoffzellenkomponente 2 bildendes Material verwendet werden.

Fig. 2 zeigt die Aufbringung eines flüssigen organischen Lösungsmittels 5 in Form einer Emulsion bzw. Mischung aus dem das Kontaktelement 1 bildenden Material und Ethanol auf die in Fig. 2 oberseitigen Flächen des Kontaktelements 1 und der Brennstoffzellenkomponente 2. In dem als Emulsion vorliegenden Lösungsmittel 5 ist sonach bereits eine gewisse Menge, typischerweise ca. 20 Vol.%, an gelöstem, das Kontaktelement 1 bildenden Material enthalten.

Das Lösungsmittel 5 kann kontaktelementseitig auf die der Brennstoffzellenkomponente 2 zugewandte und/oder die der Brennstoffzellenkomponente 2 abgewandte Seite des Kontaktelements 1 aufgebracht werden. Die Aufbringung des Lösungsmittels 5 erfolgt beispielsweise mit einem Pinsel. Das Lösungsmittel 5 ist dazu geeignet, das Kontaktelement 1 zumindest oberflächenseitig an- bzw. aufzulösen.

Wie durch den in Fig. 2 gezeigten Pfeil P1 angedeutet, erfolgt im Weiteren ein Anordnen bzw. Auflegen des Kontaktelements 1 auf die mit Lösungsmittel 5 benetze Fläche der Brennstoffzellenkomponente 2.

Fig. 3 zeigt den Zustand, in dem das Kontaktelement 1 entsprechend auf der Brennstoffzellenkomponente 2 angeordnet wurde. Das Kontaktelement 1 liegt hier flächig bzw. unmittelbar auf der Brennstoffzellenkomponente 2 auf. Ersichtlich befindet sich in Fig. 3 noch eine bestimmte Menge an Lösungsmittel 5 respektive gelöstem Kontaktelement 1 zwischen dem nicht gelösten Teil des Kontaktelements 1 und der Brennstoffzellenkomponente 2.

In einem folgenden Schritt des Verfahrens erfolgt ein Abdampfen bzw. Verdampfen des Lösungsmittels 5, was durch die Pfeile P2 angedeutet ist. Der Verdampfungsvorgang des Lösungsmittels 5 kann durch die gezielte Einstellung bestimmter Prozessbedingungen, wie z. B. Druck und/oder Temperatur, gesteuert respektive beschleunigt werden.

Fig. 4 zeigt schließlich den Zustand, in dem das Lösungsmittel 5 vollständig abgedampft bzw. verdampft ist. Es liegt nun eine Bauteilgruppe vor, welche in einer Brennstoffzelle 4, insbesondere einer Hochtemperatur-Brennstoffzelle, deren Betriebstemperatur oberhalb 500°C, insbesondere zwischen 600 und 1000°C, liegt (vgl. Fig. 4), eingesetzt wird bzw. eingesetzt werden kann.

Der Aufbau einer Brennstoffzelle 4 respektive eines Stapels aus mehreren aufeinander bzw. nebeneinander angeordneten Brennstoffzellen 4 ist hinlänglich bekannt. In der Regel schließt sich hier oberseitig an das Kontaktelement 1 eine Interkonnektorplatte (nicht gezeigt) und unterseitig an die Brennstoffzellenkomponente 2 ein Elektrolyt (nicht gezeigt) an.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie sie in den Ansprüchen offenbart wird zu verlassen.

## Patentansprüche

1. Verfahren zur Verbindung eines elektrisch leitfähigen Kontaktelements (1), das bei Temperaturen oberhalb 500°C, insbesondere zwischen 600 und 1000°C, elektrisch leitfähige Eigenschaften aufweist, mit wenigstens einer einer Brennstoffzelle (4) zugeordneten, elektrisch leitfähigen Brennstoffzellenkomponente (2), **gekennzeichnet durch** die Schritte:
- Bereitstellen eines in einem Lösungsmittel (5) löslichen Kontaktelements (1), das bei Temperaturen oberhalb 500°C, insbesondere zwischen 600 und 1000°C, elektrisch leitfähige Eigenschaften aufweist, sowie einer elektrisch leitfähigen Brennstoffzellenkomponente (2),
- Aufbringen eines Lösungsmittels (5) zum An- oder Auflösen zumindest des Kontaktelements (1) auf das Kontaktelement (1) und/oder die Brennstoffzellenkomponente (2),
- Anordnen des Kontaktelements (1) auf der Brennstoffzellenkomponente (2),
- Verdampfen des Lösungsmittels (5) unter Ausbildung einer Verbindung zwischen dem Kontaktelement (1) und der Brennstoffzellenkomponente (2).

2. Verfahren nach Anspruch 1, **dadurch gekennzeichnet, dass** als Kontaktelement (1) ein aus Lanthan-Strontium-Cobalt-Ferrit gebildetes Material oder ein Lanthan-Strontium-Cobalt-Ferrit umfassendes Material verwendet wird oder ein Lanthan-Strontium-Manganit oder ein Lanthan-Strontium-Manganit umfassendes Material verwendet wird.

3. Verfahren nach Anspruch 2, **dadurch gekennzeichnet, dass** ein ungesintertes Lanthan-Strontium-Cobalt-Ferrit oder ein ungesintertes Lanthan-Strontium-Manganit verwendet wird.

4. Verfahren nach einem der vorangehenden Ansprüche, **dadurch gekennzeichnet, dass** als Kontaktelement (2) ein plattenartiges, insbesondere folienartiges, Material verwendet wird.

5. Verfahren nach einem der vorangehenden Ansprüche, **dadurch gekennzeichnet, dass** das Kontaktelement (2) vor dem Aufbringen des Lösungsmittels (5) mit wenigstens einer Durchbrechung (3) versehen wird.

6. Verfahren nach einem der vorangehenden Ansprüche, **dadurch gekennzeichnet, dass** als Lösungsmittel (5) ein organisches Lösungsmittel, insbesondere Ethanol, verwendet wird.

7. Verfahren nach einem der vorangehenden Ansprüche, **dadurch gekennzeichnet, dass** eine Emulsion aus Lösungsmittel (5) und darin gelöstem das Kontaktelement (1) bildenden Material als Lösungsmittel (5) verwendet wird.

8. Verfahren nach einem der vorangehenden Ansprüche, **dadurch gekennzeichnet, dass** als elektrisch leitfähige Brennstoffzellenkomponente (2) eine Elektrode, insbesondere eine Kathode, verwendet wird.

9. Brennstoffzelle (4), insbesondere Hochtemperatur-Brennstoffzelle, umfassend wenigstens eine elektrisch leitfähige Brennstoffzellenkomponente (2) und wenigstens ein mit dieser gemäß dem Verfahren nach einem der vorangehenden Ansprüche verbundenes elektrisch leitfähiges Kontaktelement (1).

## Claims

1. Method for connecting an electrically conductive contact element (1) which has electrically conductive properties at temperatures of above 500°C, in particular of between 600 and 1000°C, to at least one electrically conductive fuel cell component (2) which is associated with a fuel cell (4), **characterized by** the steps:
- providing a contact element (1) which is soluble in a solvent (5) and, at temperatures of above 500°C, in particular of between 600 and 1000°C, has electrically conductive properties, as well as an electrically conductive fuel cell component (2),
- applying a solvent (5) for partially or completely dissolving at least the contact element (1) onto the contact element (1) and/or the fuel cell component (2),
- arranging the contact element (1) on the fuel cell component (2),
- evaporating the solvent (5) to form a connection between the contact element (1) and the fuel cell component (2).

2. Method according to Claim 1, **characterized in that** the contact element (1) used is a material formed of lanthanum strontium cobalt ferrite or a material comprising lanthanum strontium cobalt ferrite or a lanthanum strontium manganite or a material comprising lanthanum strontium manganite.

3. Method according to claim 2, **characterized in that** an unsintered lanthanum strontium cobalt ferrite or an unsintered lanthanum strontium manganite is used.

4. Method according to one of the preceding claims, **characterized in that** the contact element (2) used is a sheetlike, in particular film-like, material.

5. Method according to one of the preceding claims, **characterized in that**, prior to the application of the solvent (5), the contact element (2) is provided with at least one hole (3).

6. Method according to one of the preceding claims, **characterized in that** the solvent (5) used is an organic solvent, in particular ethanol.

7. Method according to one of the preceding claims, **characterized in that** an emulsion of solvent (5) and material which forms the contact element (1) dissolved therein is used as the solvent (5).

8. Method according to one of the preceding claims, **characterized in that** the electrically conductive fuel cell component (2) used is an electrode, in particular a cathode.

9. Fuel cell (4), in particular high-temperature fuel cell, comprising at least one electrically conductive fuel cell component (2) and at least one electrically conductive contact element (1) connected thereto in accordance with the method according to one of the preceding claims.

## Revendications

1. Procédé de liaison d'un élément (1) de contact conducteur de l'électricité, qui a des propriétés conductrices de l'électricité à des températures supérieures à 500°C, notamment entre 600 et 1000°C, a au moins un composant (2) de pile à combustible conducteur de l'électricité et associé à une pile (4) à combustible, **caractérisé par** les stades :
- on se procure un élément (1) de contact, qui est soluble dans un solvant (5) et qui a des propriété conductrice de l'électricité à des températures supérieures à 500°C, notamment entre 600 et 1000°C, ainsi qu'un composant (2) de pile à combustible conducteur de l'électricité,
- on dépose, sur l'élément (1) de contact et/ou sur le composant (2) de pile à combustible, un solvant (5) pour attaquer ou dissoudre au moins l'élément (1) de contact,
- on met l'élément (1) de contact sur le composant (2) de pile à combustible,
- on évapore le solvant (5) avec formation d'une liaison entre l'élément (1) de contact et le composant (2) de pile à combustible.

2. Procédé suivant la revendication 1, **caractérisé en ce que** l'on utilise comme élément (1) de contact un matériau formé d'une ferrite de lanthane-strontium-cobalt ou un matériau comprenant une ferrite de lanthane-strontium-cobalt ou une manganite de lanthane-strontium ou un matériau comprenant une manganite de lanthane-strontium.

3. Procédé suivant la revendication 2, **caractérisé en ce que** l'on utilise une ferrite de lanthane-strontium-cobalt non frittée ou une manganite de lanthane-strontium non frittée.

4. Procédé suivant l'une des revendications précédentes, **caractérisé en ce que** l'on utilise comme élément (2) de contact un matériau de type en plaque, notamment de type en feuille.

5. Procédé suivant l'une des revendications précédentes, **caractérisé en ce que** l'on ménage au moins une traversée dans l'élément (2) de contact avant le dépôt du solvant (5).

6. Procédé suivant l'une des revendications précédentes, **caractérisé en ce que** l'on utilise comme solvant (5) un solvant organique, notamment de l'éthanol.

7. Procédé suivant l'une des revendications précédentes, **caractérisé en ce que** l'on utilise comme solvant (5) une émulsion constituée du solvant (5) et d'une matière, qui y est dissoute et qui forme l'élément (1) de contact.

8. Procédé suivant l'une des revendications précédentes, **caractérisé en ce que** l'on utilise comme composant (2) de pile à combustible conducteur de l'électricité, une électrode, notamment une cathode.

9. Pile (4) à combustible, notamment pile à combustible à haute température, comprenant au moins un composant (2) de pile à combustible conducteur de l'électricité et au moins un élément (1) de contact conducteur de l'électricité et relié à celui-ci par le procédé suivant l'une des revendications précédentes.
